# EUROPEAN PATENT APPLICATION

(11) **EP 0 938 849 A1**
(43) Date of publication of application: **01.09.1999**
(21) Application number: 98200508.4
(22) Date of filing: 18.02.1998
(51) Int. Cl.: A23L 1/235, A23L 1/22

(54) **A composition with a fresh, fruit like taste**

(71) Applicant: QUEST INTERNATIONAL B.V., 1411 GP Naarden (NL)
(72) Inventor: Arnaud, Roger Sylvain Jean Paul, 1251 RN, Laren (NL)
(74) Representative: Wiesenhaan, Herman, Drs.

(57) **Abstract**

The invention provides a composition with a fresh, fruit like taste comprising on a weight basis
at least 40% of mono- and/or disaccharide;
at least 2 of at least two organic acids with at least two carboxylic groups in the molecule, of which two are present in a weight ratio within the range of 1:19 to 19:1;
less than 58% of water.
Preferably the composition comprises monosaccharide(s) and disaccharide(s) in a weight ratio in excess of 1:9.
Preferably the monosaccharide is glucose and/or fructose and the disaccharide is sucrose. Preferably the composition comprises at least one hydroxycarboxylic acid and an alkanedioic acid, preferably citric acid, malic acid and succinic acid. More preferably the weight ratio of malic acid to succinic acid is from 1:1 to 19:1 and the weight ratio of succinic acid to citric acid is from 1:1 to 1:19 (any salts being calculated as free acids). Foodstuffs containing the composition are also disclosed.

## Description

This invention relates to a composition with a fresh, fruit like taste. Compositions with a fruit like taste are useful in the food industry and are often applied to impart a fruit like taste to products such as dairy products, confectionery and ice products. Sometimes they are applied together with a fruit product e.g. fruit puree, sometimes they are applied in the absence of a fruit product. Current commercially available compositions with a fruit like taste usually simply contain a food acid like citric acid to obtain an acid note and mono-/disaccharide to obtain a sweet note. The taste sensation such simple products impart to foodstuffs is usually defective, even when they are applied together with considerable amounts of fruit product. Moreover since fresh fruit is only abundantly available during relatively short periods each year the food industry has to rely on the use of conserved fruit products during the greater part of the year. Therefore there is a need for a composition with a fresh, fruit like taste which is able to function as a fruit replacer in itself, but which is also capable of refreshing the organoleptic impression of conserved fruit products, so that they can also be used with advantage in combination with conserved fruit products and applied so in foodstuffs

The present invention therefore provides in a first embodiment a composition with a fresh, fruit like taste comprising on a weight basis
at least 40%, preferably at least 50%, of mono- and/or disaccharide;
at least 2, preferably at least 3%, of at least two organic acids with at least two carboxylic groups in the molecule, of which two are present in a weight ratio within the range of 1:19 to 19:1, preferably of 1:9 to 9:1;
less than 58%, preferably less than 47%, of water.
It will be clear that the main weight percentages mentioned above have to read in combination and the same applies for the preferred weight percentages. Dependent on the weight percentage of water the composition may have the form of a powder, a paste or a liquid.
In a preferred embodiment the composition comprises monosaccharide(s) and disaccharide(s) in a weight ratio in excess of 1:9, preferably in excess of 1:5. Preferably the monosaccharide comprises glucose and/or fructose.
Preferably the disaccharide comprises sucrose. Other saccharides can also be used e.g. lactose, ribose, galactose etc. For powder products it is preferred to use pure, dry starting materials such as crystallized sugars.
For paste like products it is, however, preferred to use other food grade ingredients such as syrups as e.g. in appropriate relative amounts such as e.g. sucrose syrup, dextrose syrup, invert sugar, corn syrup, maple syrup, malt syrup etc.

In a preferred embodiment the organic acids comprises 3 to 8, preferably 4 to 6, carbon atoms in the molecule.
Suitable acids are e.g. citric acid, tartaric acid, malic acid, lactic acid, ascorbic acid, succinic acid, malonic acid, fumaric acid and maleic acid. More preferably in the composition according to the present invention at least one of the organic acids is a hydroxycarboxylic acid. More in particular it is preferred that the composition according to the present invention comprises as at least one of the organic acids an alkanedioic acid. Preferred hydroxycarboxylic acids are citric acid and malic acid; preferred alkanedioic acids are succinic acid and fumaric acid.
It has been found particularly important to use hydroxycarboxylic acid and alkanedioic acid in suitable relative amounts and therefore it is preferred they are present in a weight ratio within the range of 1:19 to 19:1, preferably within 1:9 to 9:1 (any salts being calculated as free acids).
It is even more highly preferred that the weight ratio of malic acid to succinic acid is from 1:1 to 19:1 and the weight ratio of succinic acid to citric acid is from 1:1 to 1:19 (any salts being calculated as free acids). The exact ratio in which the various organic acids are dosed depends inter alia also on the particular fruit taste one is aiming at. E.g. a strawberry taste retires relatively more citric acid, whereas a mango taste requires more succinic acid. An apple or a pear taste require more malic acid. In practice the bulk of the organic acids present in the composition according to the present invention is available in the form of free acids and most of the anions available originate e.g. from tap water used. Therefore the pH of the end product normally ranges between 2.5 and 5, preferably between 3 and 4.5.
Optionally the composition according to the invention may also comprises from 0.01 to 0.5 wt% of fruit aroma compounds, optionally a colouring material and optionally less than 30% of a fruit material such as fruit pulp, fruit puree or fruit juice (concentrate) can be incorporated.
Thickening agents, gelling agents e.g. gums, pectin etc. are also useful ingredients.

The present invention further provides a process for preparing a foodstuff with a fresh, fruit like taste by incorporating in said foodstuff a composition with a fresh, fruit like taste as described above in a weight level in the range of 0.5 to 20%, preferably from 2 to 10% calculated on the end product. Incorporating aims to cover the addition of the composition with the fresh, fruit like taste according to the invention as such, diluted as a master batch or addition of the various ingredients of the composition. After incorporation the mixture obtained is homogenized by stirring, mixing or the like. Sometimes it is possible to spoon the composition into the foodstuff.
More preferably the foodstuff comprises a dairy product, confectionery and/or an ice product. The term dairy product is aimed to cover in particular yoghurts, desserts, dairy drinks, curd cheese, cottage cheese, custard etc.; the term confectionery as used herein aims to cover such products with a fruit like taste and ice products aims to cover sorbet, water ice, sherbet, ice milk, soft ice, ice cream, frozen custard etc.
The present invention further provides a foodstuff in which a composition with a fruit like taste as described above has been incorporated in a weight level in the range of 0.5 to 20%, preferably from 2 to 10%. More preferably the foodstuff comprises a dairy product, confectionery and/or an ice product.

The invention is illustrated by the following examples. It is observed that all percentages and parts mentioned herein are taken on a weight basis unless indicated otherwise.

### Examples 1 and 2 (B and C) and comparative experiments (A and D).

Four different sorbet products (A,B,C and D) were prepared from premixes that were obtained by admixing the following ingredients in weight percentages as specified below:

| Ingredients | A | B | C | D |
|---|---|---|---|---|
| Sucrose | 18 | 18 | 18 | 22 |
| Corn syrup solids | 5 | 5 | 5 | 5 |
| Sherex IC9236* | 4 | 4 | 4 | 4 |
| Hygel 8260** | 0.45 | 0.45 | 0.45 | 0.45 |
| Citric acid (50wt% aq. sol.) | 0.5 | 0.5 | 0.5 | 0.55 |
| (The above ingredients constitute the standard base) | | | | |
| Mango pulp (Brix 15, pH 3.5) | 25 | 12.5 | | |
| Mango fruit composition | | 3.15 | 6.3 | |
| Mango flavour QL 15949*** | 0.12 | 0.06 | | 0.12 |
| Water | rest | rest | rest rest | |

| | | | | |
|---|---|---|---|---|
| * Sherex IC9236 is a mixture of i-carrageenan, locust bean gum, pectin and gelatin ex Quest International BV, Naarden, The Netherlands. | | | | |
| ** Hygel 8260 is a milk protein hydrolysate ex Quest International BV, Naarden, The Netherlands. | | | | |
| *** Mango flavour QL 15949 is a mango flavour ex Quest International BV, Naarden, The Netherlands. | | | | |

The mango fruit composition according to the present invention used in sorbets B and C is a pourable semi-transparent liquid that was prepared by homogenizing and pasteurizing a mixture of the following ingredients. The procedure followed was that the sugars, the acids and water were first mixed and then the pectin, flavour and colours were added and again thoroughly mixed.

| Ingredients | weight % |
|---|---|
| Sucrose | 39.25 |
| Fructose | 13.12 |
| Glucose | 9.92 |
| Citric acid | 2.4 |
| Malic acid | 0.24 |
| Succinic acid | 0.16 |
| Water | 31.1 |
| Pectin LM (Kopenhagen) | 0.34 |
| Mango flavour QL 15949 | 2.0 |
| Tumeric WS6 5Z08330 | 0.8 |
| Anatto WS2 2Z01258 | 0.64 |

The premixes (not yet containing mango pulp, mango fruit composition or citric acid) were homogenized through an APV homogenizer at 90°C and 10 000 kPa. Subsequently the premixes were pasteurized in an APV plate heat exchanger at 82°C for 30 seconds. After pasteurization citric acid, mango pulp and/or mango fruit composition were added and the complete homogenized premix was passed through a scraped surface heat exchanger (Hoyer MF50) yielding sorbet products at an overrun of 80%.
The sorbet products were filled in small plastic containers and stored in a freezer for 2 days after which they were evaluated by a panel. The main conclusions can be summarized as follows:
- Products A and a are very similar in terms of flavour and mouthfeel The flavour of product B is preferred as it does not exhibit some undesirable notes that were clearly observed in product A, notably cooked, jammy notes. As a result product B was perceived to have a more fresh, genuine mango fruit taste.
- Product C was deemed to be quite different from products A and B in both taste and texture. The difference in texture can be easily explained from the absence of fruit fibres.
- Product C was found to be clearly superior to product D in terms of taste. Product C was found to have a much more fresh taste and to exhibit a genuine fruit-like "bite" which was not found in product D.

### Example 3

Following the general procedure described in Example 1 a composition with a strawberry like taste was prepared. A mixture of sugars was prepared by dry blending 15 wt% sucrose, 30 wt% glucose and 55 wt% fructose. Also a blend of organic acids was prepared by dry mixing 74 wt% citric acid, 25 wt% malic acid and 1 wt% of succinic acid.
A composition suitable as 100% replacer for strawberry puree is prepared by mixing:

| | |
|---|---|
| 1.0 g | Strawberry flavour 11308/28* |
| 15 g | Sugar mixture identified above |
| 1.6 g | Blend of organic acids identified above |
| 0.3 g | Pectin LM |
| up to 250 g water | |

| | |
|---|---|
| * Strawberry flavour 11308/28 is a strawberry flavour ex Quest International BV, Naarden, The Netherlands. | |

This composition replacing strawberry is added to 750.0 g of standard sorbet base (cf Ex. 1) which comprised 0.1 wt% strawberry flavour 11308/21 and 0.6 wt % citric acid 50% and the mixture thus obtained was frozen to form strawberry sorbet ice. A test panel of experienced tasters found this sorbet ice to have a fresh strawberry like taste and flavour.

### Example 4

Following the general procedure described in Example 1 a composition with a pear like taste was prepared. A mixture of sugars was prepared by dry blending 15 wt% sucrose, 30 wt% glucose and 55 wt% fructose. Also a blend of organic acids was prepared by dry mixing 41 wt% citric acid, 56 wt% malic acid and 3 wt% of succinic acid.
A composition suitable as a 100% replacer for pear puree is prepared by mixing:

| | |
|---|---|
| 1.0 g | Pear QL 13903* |
| 15 g | Sugar mixture identified above |
| 0.8 g | Blend of organic acids identified above |
| 1.0 g | Pectin LM |
| up to 180 g Water | |

| | |
|---|---|
| * Pear QL 13903 is a pear flavour ex Quest International BV, Naarden, The Netherlands. | |

This composition replacing pear is added to 820 g of a full fat yoghurt by spooning in. A taste panel of experienced tasters found the yoghurt to have a fresh pear like taste and flavour.

## Claims

1. A composition with a fresh, fruit like taste comprising on a weight basis
at least 40%, preferably at least 50%, of mono- and/or disaccharide;
at least 2, preferably at least 3%, of at least two organic acids with at least two carboxylic groups in the molecule, of which two are present in a weight ratio within the range of 1:19 to 19:1, preferably of 1:9 to 9:1 ;
less than 58%, preferably less than 47%, of water.

2. A composition according to claim 1, in which the composition comprises monosaccharide(s) and disaccharide(s) in a weight ratio in excess of 1:9, preferably in excess of 1:5.

3. A composition according to claim 1 and 2, in which the organic acids comprises 3 to 8, preferably 4 to 6, carbon atoms in the molecule.

4. A composition according to any of the preceding claims, in which at least one of the organic acids is a hydroxycarboxylic acid.

5. A composition according to any of the preceding claims, in which at least one of the organic acids is an alkanedioic acid.

6. A composition according to claim 4 or 5, in which hydroxycarboxylic acid and alkanedioic acid are present in a weight ratio within the range of 1:19 to 19:1, preferably of 1:9 to 9:1.

7. A composition according to any of the preceding claims, in which the organic acids comprises succinic acid.

8. A composition according to any of the preceding claims, in which the organic acids comprises fumaric acid.

9. A composition according to any of the preceding claims, in which the organic acids comprises malic acid.

10. A composition according to any of the preceding claims, in which the organic acids comprises citric acid.

11. A composition according to any of the preceding claims, in which the weight ratio of malic- to succinic acid is from 1:1 to 19:1 and the weight ratio of succinic- to citric acid is from 1:1 to 1:19 (any salts being calculated as free acids).

12. A composition according to any of the preceding claims, in which the monosaccharide comprises glucose and/or fructose.

13. A composition according to any of the preceding claims, in which the disaccharide comprises sucrose.

14. A composition according to any of the preceding claims, which comprises from 0.01 to 0.5 wt% of fruit aroma chemicals.

15. A composition according to any of the preceding claims, in which a colouring material has been incorporated.

16. A composition according to any of the preceding claims, in which less than 30% of a fruit material such as fruit pulp, fruit puree or fruit juice (concentrate) has been incorporated.

17. A process in which a foodstuff with a fresh, fruit like taste according to any of the preceding claims is incorporated in a weight level in the range of 0.5 to 20%, preferably from 2 to 10%.

18. A process according to the preceding claims in which, claim the foodstuff comprises a dairy product, confectionery and/or an ice product.

19. A foodstuff in which a composition with a fruit like taste according to any of the claims 1 to 16 has been incorporated in a weight level in the range of 0.5 to 20%, preferably from 2 to 10%.

20. A foodstuff according to the preceding claim comprising a dairy product, confectionery and/or an ice product.

## Amended claims

### Amended claims in accordance with Rule 86(2) EPC.

1. A composition with a fresh, fruit like taste comprising on a weight basis :
at least 40% of mono- and/or disaccharide,
at least 2% of at least one hydroxycarboxylic acid selected from the group of citric acid, malic acid, tartaric acid, and ascorbic acid and at least one dicarboxylic acid selected from the group of succinic acid, fumaric acid, malonic acid and maleic acid where the hydroxycarboxylic acid(s) and the dicarboxylic acid(s) are present in a weight ratio in the range of 1:19 to 19:1 (any salts being calculated as free acids) and;
less than 58% of water.

2. A composition according to claim 1, in which the hydroxycarboxylic acid(s) is/are citric acid and/or malic acid and the dicarboxylic acid(s) is/are succinic acid and/or fumaric acid.

3. A composition according to claim 1 or 2, in which the hydroxycarboxylic acid is citric acid and the dicarboxylic acid(s) is/are succinic acid and/or fumaric acid.

4. A composition according to claim 1 or 2, in which the hydroxycarboxylic acids are citric acid and malic acid and the dicarboxylic acid(s) is/are succinic acid and/or fumaric acid.

5. A composition according to any of the preceding claims, in which the weight ratio of hydroxycarboxylic to dicarboxylic acid is from of 1:9 to 9:1.

6. A composition according to any of the preceding claims, in which the amount of mono- and/or disaccharide is at least 50%.

7. A composition according to any of the preceding claims, in which the amount of hydroxycarboxylic acid and and dicarboxylic acid taken together is at least 3%.

8. A composition according to a any of the preceding claims, in which the amount of water is less than 47%.

9. A composition according to any of the preceding claims, in which the weight ratio of malic- to succinic acid is from 1:1 to 19:1 and the weight ratio of succinic-to citric acid is from 1:1 to 1:19.

10. A composition according to any of the preceding claims, in which the composition comprises monosaccharide(s) and disaccharide(s) in a weight ratio in excess of 1:9, preferably in excess of 1:5.

11. A composition according to any of the preceding claims, in which the monosaccharide comprises glucose and/or fructose.

12. A composition according to any of the preceding claims, in which the disaccharide comprises sucrose.

13. A composition according to any of the preceding claims, which comprises from 0.01 to 0.5 wt% of additional fruit aroma chemicals.

14. A composition according to any of the preceding claims in which a colouring material has been incorporated.

15. A composition according to any of the preceding claims, in which less than 30% of a fruit material such as fruit pulp, fruit puree or fruit juice (concentrate) has been incorporated.

16. A process for preparing a foodstuff by incorporating in said foodstuff a composition with a fresh, fruit like taste according to any of the preceding claims in a weight level in the range of 0.5 to 20%, preferably from 2 to 10%, calculated on the end product.

17. A process according to the preceding claim in which, claim the foodstuff comprises a dairy product, confectionery and/or an ice product.

18. A foodstuff in which a composition with a fruit like taste according to any of the claims 1 to 15 has been incorporated in a weight level in the range of 0.5 to 20%, preferably from 2 to 10%.

19. A foodstuff according to the preceding claim comprising a dairy product, confectionery and/or an ice product.
